# FASCICULE DE BREVET EUROPEEN

(11) **EP 2 998 222 B1**
(45) Date de publication et mention de la délivrance du brevet: **28.02.2018**
(21) Numéro de dépôt: 15185664.8
(22) Date de dépôt: 17.09.2015
(51) Int. Cl.: B60N 2/22, B64D 11/06, B60N 2/68

(54) **SIÈGE MULTI-POSITIONS POUR OPÉRATEUR DE CONDUITE**
MULTIPOSITIONSSITZ FÜR FAHRZEUGBEDIENER
ADJUSTABLE SEAT FOR DRIVING OPERATOR

(30) Priorité: 17.09.2014 FR 1458784
(43) Date de publication de la demande: 23.03.2016
(73) Titulaire: Stelia Aerospace, 17300 Rochefort (FR)
(72) Inventeur: CECINAS, Laurent, 17870 BREUIL MAGNE (FR); ATGER, Bastien, 17300 ROCHEFORT (FR)
(74) Mandataire: Maupilier, Didier

(56) Documents cités:
- EP-A2- 0 195 930
- WO-A1-95/34234
- WO-A1-2012/053022
- DE-A1- 19 705 477

## Description

L'invention appartient au domaine des sièges pour la conduite de machine, par exemple pour la conduite de véhicules. Elle concerne plus particulièrement un siège utilisé par un opérateur, ledit siège comportant une position de repos adaptée pour permettre à l'opérateur de maintenir une surveillance de la machine pendant une période de repos. Un tel siège est par exemple adapté à la conduite d'un véhicule, tel qu'un avion, lorsque la conduite du véhicule est assurée par deux opérateurs.

Dans les machines complexes et devant fonctionner sur une période trop longue pour que la conduite en soit assurée par un seul opérateur, il est généralement fait appel à des dispositifs de conduite automatique et ou à des postes de conduite à deux ou plus opérateurs pouvant se relayer pour assurer la conduite de la machine.

Lorsqu'un opérateur est déchargé de la conduite il bénéficie d'une période de repos mais dans de nombreux cas l'opérateur reste à son poste de conduite et se contente de placer son siège dans une position lui assurant une position de détente musculaire et squelettique optimale. Dans la plupart des cas le dossier du siège est plus ou moins inclinable vers l'arrière pour procurer la position de repos.

Ainsi il est connu des sièges dont un dossier peut être incliné comme par example des sièges de véhicules décrit dans la demande de brevet EP 0195930 A2 (correspondant au préambule de la revendication indépendante) ou encore la demande de brevet internationale WO 2012/053022 ou encore des sièges médicalisés comme dans la demande de brevet internationale WO 95/34234 A1. Toutefois, ces sièges généralement adaptés pour des utilisateurs tels que des voyageurs n'offrent pas de possibilité pour agir sur la forme de l'assise, et ne permettent pas d'adopter des positions de travail et des position de repos en restant à un poste de conduite.

Il est également connu de la demande de brevet DE 19705477 A1 un siège dont l'assise comporte deux parties articulées. Mais dans ce cas l'assise, résultant des deux parties dépliées, est fixe et n'est plus utilisable lorsque la partie avant est relevée à la manière d'un strapontin. Un tel siège ne répond donc pas non plus aux besoins d'un opérateur devant rester à son poste de conduite sur de longues périodes.

Cette situation est typique dans le pilotage des avions civils dans lesquels deux pilotes assurent la conduite de l'avion soit simultanément de manière coordonnée dans les phases de vol critique (décollage et atterrissage en particulier) soit alternativement dans les phases de vol dans lesquels la charge de travail est réduite (en croisière par exemple).

Cependant, lorsque le pilote en phase de repos utilise une position relativement inclinée de son siège pour se détendre, il ne dispose plus, dans la position naturelle qu'il a adoptée, des informations affichées sur les instruments de contrôle et il sort de la boucle de pilotage. En cas d'urgence il lui faut alors un temps supplémentaire pour prendre connaissance des informations et comprendre la situation dans laquelle il doit intervenir.

De ce fait, il est fréquent que des pilotes en période de repos ne placent pas leur sièges dans une position optimale pour le repos et préfèrent, au détriment de leur récupération physique par une réelle période de repos, rester dans une position de travail afin de rester informés des paramètres de vol et de pouvoir reprendre plus efficacement une activité de conduite du vol ou de la machine.

La présente invention a pour objet de remédier à ces inconvénients en bénéficiant d'une structure de siège de conduite, par exemple de conduite d'un véhicule ou d'une manière générale d'une machine nécessitant des actions et des surveillances, ne comportant qu'un nombre réduit de parties structurales mobiles tout en apportant un confort amélioré en particulier en période de repos d'un opérateur, par exemple un pilote d'aéronef utilisant le siège.

Suivant l'invention, un siège de conduite comportant une assise et un dossier formant une structure de soutien et une surface d'appui pour un occupant du siège et déterminant un point de référence du siège SRP situé dans un plan vertical axial du siège à une jonction de surfaces d'appui de l'assise et du dossier.

Suivant une architecture connue de siège comportant des réglages, le dossier est fixé articulé sur l'assise autour d'un axe d'inclinaison de dossier, orienté suivant une direction d'un axe Y perpendiculaire à un plan vertical de symétrie axial d'ensemble du siège, situé dans une partie basse du dossier et dans une partie arrière de l'assise de sorte à permettre un angle d'inclinaison de dossier du dossier par rapport à une direction verticale Z réglable.

Dans le siège de l'invention :
- l'assise est segmentée et comporte un panneau d'assise arrière, d'inclinaison fixe constante par rapport à une structure porteuse du siège, et comporte un panneau d'assise avant, situé dans le prolongement et en avant du panneau d'assise arrière, un angle d'inclinaison d'assise (Alpha-A) du panneau d'assise avant par rapport au panneau d'assise arrière étant modifiable lorsque le siège est utilisé ;
- le dossier est également segmenté et comporte un panneau de dossier inférieure, maintenu du côté d'un bord inférieur dudit panneau de dossier inférieur avec un bord arrière du panneau d'assise arrière de sorte à former l'angle d'inclinaison de dossier (Bêta) par rapport à la direction verticale Z modifiable, et comporte un panneau de dossier supérieur situé dans le prolongement et au-dessus du panneau de dossier inférieur, un angle de relevage (Alpha-D) du panneau de dossier supérieur par rapport au panneau de dossier inférieur étant modifiable lorsque le siège est utilisé.

Il est ainsi obtenu un siège dont la structure de soutien de l'occupant du siège est en mesure de prendre des formes, suivant un profil de la structure de soutien, dont les courbures sont modifiables en fonction des besoins de l'occupant par des réglages des angles entre les panneaux de l'assise et du dossier segmentant le siège. Selon l'invention, le siège comporte au moins une position de travail dans laquelle un occupant est dans une position assise avec le dossier redressé et l'assise sensiblement horizontale et comporte au moins une position de veille dans laquelle l'occupant occupe le siège avec le dossier incliné vers l'arrière et partiellement redressé dans une partie supérieure correspondant au panneau de dossier supérieur et l'assise est relevée dans une partie avant correspondant au panneau d'assise avant.

Il est ainsi obtenu par le réglage des angles entre les différents panneaux d'assise et de dossier segmentant le siège un siège pouvant prendre une position conventionnelle de travail et pouvant prendre une position de relaxation musculo-squelettique sans priver l'occupant du siège de la possibilité de surveiller des écrans de la machine, par exemple un aéronef, dont la conduite est momentanément réalisée par un autre opérateur ou par un automatisme.

Dans une forme particulière de réalisation, l'au moins une position de travail se caractérise par :
- un angle d'inclinaison de dossier (Bêta) faiblement positif vers l'arrière, inférieur à 20 degrés, correspondant à un dossier redressé dans une position sensiblement verticale ;
- un angle de relevage (Alpha-D) du panneau de dossier supérieur faible, inférieur à 10 degrés en valeur absolue, correspondant à un dossier relativement plat ;
- un angle d'inclinaison d'assise (Alpha-A) faible, inférieur à 3 degrés en valeur absolue, correspondant à une assise relativement plate ;
et l'au moins une position de veille se caractérise par ;
- un angle d'inclinaison de dossier (Bêta) positif, vers l'arrière, égal ou supérieur à 30 degrés et inférieur ou égal à 60 degrés ;
- un angle de relevage (Alpha-D) positif, vers le haut, égal ou supérieur à 20 degrés et inférieur ou égal 35 degrés ;
- un angle d'inclinaison d'assise (Alpha-A) positif, vers le haut, égal ou supérieur à 5 degrés et inférieur ou égal à 15 degrés.

De telles valeurs des angles entres les panneaux d'assise et de dossier assurent des postures adaptées aux conditions de travail et aux conditions de veille exigeant de maintenir l'attention de l'occupant du siège.

Avantageusement, lorsque l'environnement du siège le permet, le siège comporte, en plus des positions de travail et de veille, au moins une position repos dans lequel l'angle d'inclinaison de dossier (Bêta) est supérieur à 60 degrés.

Avantageusement, lorsque le siège et son occupant sont susceptibles d'être soumis à des accélérations significatives, le siège comporte, en plus des positions de travail et de veille, et le cas échéant de repos, au moins une position de "crash" dans laquelle le dossier est redressé et dans laquelle l'angle d'inclinaison d'assise (Alpha-A) est égal ou supérieur à 5 degrés, de préférence supérieur à 8 degrés.

De telles positions de repos et de "crash" sont obtenues par des réglages adaptés des angles entre les panneaux d'assise et de dossier sans affecter de manière significative la complexité du siège.

Dans une forme de réalisation, une longueur Lpar du panneau d'assise arrière, suivant une direction longitudinale X du siège entre le point de référence SRP et un bord avant dudit panneau d'assise arrière, est déterminé à une valeur minimale pour qu'une tubérosité ischiatique d'un occupant du siège prenne appui sur ledit panneau d'assise arrière, au moins pour une population d'occupants du siège envisagée.

Par exemple pour une population de pilote d'aéronef, avantageusement la longueur Lpar est sensiblement égale à 150 mm.

Il est ainsi assuré un confort optimal de l'occupant du siège en assurant une position stable sur l'assise.

Dans une forme de réalisation, une longueur LPinf du panneau de dossier inférieur, entre le point de référence SRP et un bord supérieur dudit panneau de dossier inférieur, est déterminé pour correspondre sensiblement au niveau de la dixième vertèbre d'un occupant du siège, au moins pour une population d'occupants du siège envisagée.

Par exemple, pour une population de pilote d'aéronef, la longueur LPinf est sensiblement égale à 400 mm.

Il est ainsi assuré un confort de l'occupant du siège et un minimum de fatigue musculo-squelettique, en particulier en position de veille, en soulevant les épaules de l'occupant par une action sur une partie souple de la colonne vertébrale.

Dans une forme de réalisation, le siège comporte un appui-tête solidaire du panneau de dossier supérieur, réglable suivant une hauteur et ou une inclinaison par rapport au panneau de dossier supérieur, et / ou comporte un repose-jambes solidaire du panneau d'assise avant, en avant d'un bord avant du panneau d'assise avant, et réglable en inclinaison.

L'appui-tête et le repose-jambes prolongent, au moins dans certaines positions, la structure de soutien et ajustent le profil de la forme de cette structure de soutien pour optimiser le maintien et le confort de l'occupant du siège en fonction des réglages des autres panneaux d'assise et de dossier.

Dans une forme de réalisation, des actionneurs sont agencés pour modifier l'angle d'inclinaison du dossier (Bêta), l'angle de relevage (Alpha-D) du panneau de dossier supérieur et l'angle d'inclinaison d'assise (Alpha-A) du panneau d'assise avant.

Les actionneurs assurent des modifications des angles entre les panneaux sans exiger d'effort physique particulier de l'occupant du siège.

Avantageusement, un dispositif de commande des actionneurs modifie la position du siège entre au moins deux positions dont au moins une position de travail et au moins une position de veille en réponse à un ordre d'un occupant du siège.

Il est ainsi, par un ordre simple de l'occupant du siège, possible de modifier les positions relatives des différents panneaux d'assise et de dossier, le cas échéant de l'appui-tête et du repose-jambes, pour placer son siège dans une position particulière : travail, veille, repos, "crash". Bien que des positions prédéterminées des panneaux du siège puissent avoir été définies pour chacune des positions du siège, dans une forme de réalisation, le siège comporte des commandes accessibles à un occupant du siège pour modifier individuellement l'angle d'inclinaison de dossier (Bêta), l'angle de relevage (Alpha-D) du panneau de dossier supérieur et l'angle d'inclinaison d'assise (Alpha-A), le cas échéant l'angle de l'appui-tête et ou l'angle du repose-jambes.

Dans une forme de réalisation, le panneau de dossier supérieur, et le cas échéant l'appui-tête, lorsque le siège comporte un appui-tête et que l'inclinaison de cet appui-tête tête est réglable et susceptible d'être inadaptée en position relevée du dossier, sont liés mécaniquement au panneau de dossier inférieur et / ou à l'assise, par exemple par des liaisons à bielles ou autres moyens de transmission mécanique, de sorte que les angles Alpha-D, le cas échéant Alpha-T, prennent automatiquement certaines valeurs et / ou soient limitées à des plages de valeurs imposées en fonction de la valeur de l'angle d'inclinaison de dossier Bêta et / ou à une position longitudinale de l'assise.

Il est ainsi évité des interférences entre des parties arrières du siège et des structures dans l'environnement du siège, ou des configurations inconfortables de structure de soutien, sans nécessiter d'attention particulière de l'occupant du siège et en autorisant des actions plus rapides de changement de configuration, y compris dans le cas de réglages mécaniques.

Dans une forme de réalisation, le panneau d'assise arrière, seul panneau qui n'est pas réglable en inclinaison, est mobile, par rapport à un environnement dudit siège, en translations suivant une direction longitudinale X, et / ou suivant une direction transversale Y, et ou suivant une direction verticale Z, les directions X, Y et Z déterminant un repère siège, par l'intermédiaire de la structure porteuse.

Il est ainsi possible d'assurer une mobilité en translation de la structure de soutien dans son ensemble pour prendre en compte les réglages souhaités en particulier en fonction de la taille de l'occupant du siège pour lui permettre un positionnement adapté dans le poste de conduite.

L'invention est décrite de manière détaillée en référence aux dessins qui représentent de manière schématique :
- la figure 1 : une vue simplifiée en perspective d'un siège suivant l'invention dans une configuration de veille avec une zone d'appui de la tête incorporée au dossier ; la figure 2 : une vue simplifiée en perspective d'un siège suivant l'invention dans une configuration de veille avec un appui-tête indépendant fixé au dossier ;
- la figure 3 : la forme du profil de la surface d'appui d'un siège dans la configuration de travail avec les différents panneaux articulés du siège dans leurs positions relatives correspondant à cette position ;
- la figure 4 : la forme du profil de la surface d'appui d'un siège dans la configuration de veille avec les différents panneaux articulés du siège dans leurs positions relatives correspondant à cette position ;
- la figure 5 : la forme du profil de la surface d'appui d'un siège dans la configuration de "crash" avec les différents panneaux articulés du siège dans leurs positions relatives correspondant à cette position ;
- la figure 6 : la forme du profil de la surface d'appui d'un siège dans la configuration de repos avec les différents panneaux articulés du siège dans leurs positions relatives correspondant à cette position.

Les figures représentent, de manière simplifiée et schématiquement, un mode de réalisation de l'invention.

Sur les figures les différentes parties du siège ne sont pas nécessairement représentées à la même échelle et des parties ou éléments similaires même représentés dans des formes différentes portent le même repère.

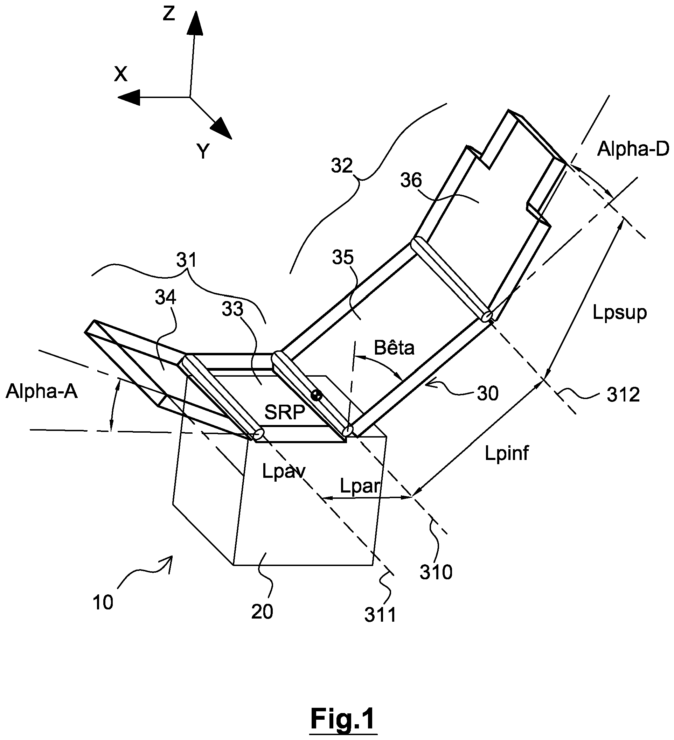

Un siège 10, tel que le siège illustré symboliquement sur la figure 1, comporte une structure de porteuse 20 sur laquelle est fixé une structure de soutien 30 pour supporter les différentes parties d'un occupant du siège : tête, buste, bassin, jambes ...

La structure de soutien 30 comporte des sous-structures juxtaposées entre elles de sorte que des surfaces supérieures des dites sous-structures forment des surfaces d'appui d'une assise 31 et d'un dossier 32 du siège.

Pour les besoins de la présente description, il sera fait référence autant que de besoin à un repère siège X, Y, Z pour les axes respectivement longitudinal, transversal et vertical du siège. Suivant l'axe longitudinal X, les termes « avant », « arrière », « antérieur » et « postérieur », et suivant l'axe vertical Z les termes « haut », « bas », « dessus » et « dessous » seront utilisés, sauf précision ou évidence contraire, suivant le sens commun qui leur serait donné par un occupant du siège. L'axe transversal Y est perpendiculaire au plan XZ, vers la gauche pour un occupant du siège, l'axe Z étant choisi positif vers le haut.

Par convention, il est également défini un point de référence du siège SRP, situé dans un plan vertical axial du siège à une jonction des surfaces d'appui de l'assise 31 et du dossier 32.

L'assise 31 comporte au moins deux sous-ensembles : un panneau d'assise arrière 33 et un panneau d'assise avant 34.

Le panneau d'assise avant 34 est assemblé au panneau d'assise arrière 33 de sorte à pouvoir prendre différentes positions angulaires, au moins deux positions angulaires distinctes déterminées sur les figures par un angle Alpha-A entre un plan moyen du panneau d'assise avant et un plan moyen du panneau d'assise arrière, considéré positif lorsque le panneau d'assise avant est relevé par rapport au panneau d'assise arrière.

Le panneau d'assise avant 34 est par exemple assemblé par l'intermédiaire d'un montage de type charnière autour d'un axe de rotation d'assise 311. Des moyens de verrouillage, non représentés sur les figures, sont agencés pour immobiliser la position angulaire dudit panneau d'assise avant par rapport au panneau d'assise arrière 33 à une valeur sélectionnée par l'occupant du siège.

Le panneau d'assise arrière 33 est fixé à la structure porteuse 20 avec une inclinaison longitudinale constante. Dans l'exemple illustré, ladite inclinaison est nulle, c'est-à-dire que le panneau d'assise avant 34 est sensiblement parallèle au plan XY, mais une inclinaison longitudinale constante modérée, positive ou négative, peut être considérée dans le contexte d'une optimisation du confort en fonction du type de poste de travail auquel le siège 10 est destiné.

Une longueur Lpar du panneau d'assise arrière 33, distance suivant la direction X entre le SRP et l'axe de rotation d'assise 311, est telle que la tubérosité ischiatique d'un occupant du siège prenne appui sur ledit panneau d'assise arrière, au moins pour une population d'occupants du siège envisagée.

Par exemple une longueur Lpar de 150 mm permet de répondre à ce critère de 5 % d'une population féminine à 95 % d'une population masculine.

Les informations anthropométriques peuvent être établies par mesures pour une population considérée et de manière générale sont disponibles dans des documentations spécialisées comme par exemple: Tilley, A.R., & Henry Dreyfuss Associates. (2002) : « The measure of man and woman: Human Factors in Design", (revised édition) New York: John Wiley & Sons.

La longueur Lpar peut cependant être adaptée, en plus ou en moins, pour prendre en compte un besoin de couvrir une population spécifique, toutefois ladite longueur Lpar sera choisie aussi réduite que possible pour ne pas limiter excessivement le panneau d'assise avant 34.

Une longueur Lpav du panneau d'assise avant 34 détermine en prolongeant le panneau d'assise arrière 33 une longueur totale d'assise sensiblement égale à Lpar + Lpav.

La longueur Lpav est donc déterminée en fonction de la valeur retenue pour la longueur Lpar afin d'obtenir une longueur totale d'assise conforme à l'usage auquel le siège est destiné, longueur totale d'assise qui correspond donc à celle d'un siège conventionnel.

Le dossier 32 comporte au moins deux sous-ensembles : un panneau de dossier inférieur 35 et un panneau de dossier supérieur 36.

Le dossier peut également comporter, comme sur l'exemple illustré, un appui-tête 37.

Le panneau de dossier inférieur 35 est, dans une partie inférieure dudit panneau de dossier inférieur, assemblé au panneau d'assise arrière 33, dans une partie arrière dudit panneau d'assise arrière, de sorte à former, entre ledit panneau de dossier inférieur et le dit panneau d'assise arrière, un angle Bêta d'inclinaison du dossier modifiable.

L'angle Bêta, tel que représenté sur les figures, est pris comme une inclinaison du panneau de dossier inférieur 32 par rapport à une verticale, direction de l'axe Z du repère siège, et considéré comme positif vers l'arrière.

Dans l'exemple illustré sur la figure 1, le panneau de dossier inférieur 35 est par exemple assemblé par l'intermédiaire d'un montage de type charnière autour d'un axe d'inclinaison de dossier 310. Des moyens de verrouillage, non représentés sur les figures, sont agencés pour immobiliser la position angulaire dudit panneau de dossier inférieur par rapport au panneau d'assise arrière 33 à une valeur sélectionnée par l'occupant du siège.

De manière connue, le dossier est plus ou moins inclinable entre une position relevée, relativement verticale, et au moins une position inclinée vers l'arrière par rapport à la position relevée.

Le panneau de dossier supérieur 36 est assemblé au panneau de dossier inférieur 36 de sorte à pouvoir prendre différentes positions angulaires, au moins deux positions angulaires distinctes déterminée sur les figures par un angle Alpha-D entre un plan moyen du panneau de dossier supérieur et un plan moyen du panneau de dossier inférieur, considéré positif lorsque le panneau de dossier supérieur est relevé par rapport au plan moyen du panneau de dossier inférieur.

Le panneau de dossier supérieur 36 est par exemple assemblé par l'intermédiaire d'un montage de type charnière autour d'un axe de rotation de dossier 312. Des moyens de verrouillage, non représentés sur les figures, sont agencés pour immobiliser la position angulaire dudit panneau de dossier supérieur avant par rapport au panneau de dossier inférieur 35 à une valeur sélectionnée par l'occupant du siège.

Une longueur Lpinf du panneau de dossier inférieur 35, distance entre le point de référence SRP et l'axe de rotation de dossier 312, est telle que ledit axe de rotation de dossier correspond sensiblement à une position de la dixième vertèbre d'un occupant du siège, pour une population d'occupants du siège envisagée.

Des essais réalisés avec une population de pilotes d'avion, pour différentes valeurs de Lpinf comprises entre 370 mm et 460 mm, ont montrés qu'une valeur de Lpinf comprise entre 390 mm et 410 mm donne satisfaction pour 90 % de l'échantillon ayant réalisé les essais, les autres 10 % de l'échantillon préférant une valeur supérieure de Lpinf sans toutefois que ne soit dépassée une valeur de 450 mm.

La longueur Lpinf est avantageusement fixée à 400 mm environ dans le cas d'une application à des sièges de pilotes d'avion, valeur pouvant être adaptée, en plus ou en moins, pour prendre en compte un besoin de couvrir une population spécifique.

Une longueur Lpsup du panneau de dossier supérieur 36 détermine en prolongeant le panneau de dossier inférieur 35 une longueur totale de dossier sensiblement égale à Lpinf + Lpsup.

La longueur Lpsup est donc déterminée en fonction de la valeur retenue pour la longueur Lpinf afin d'obtenir une longueur totale du dossier 32 conforme à l'usage auquel le siège est destiné.

Le panneau de dossier supérieur 36 est dans ce cas d'une longueur au moins suffisante pour permettre à un utilisateur du siège d'y appuyer les épaules et de préférence la tête si le siège ne comporte pas d'appui-tête indépendant comme dans la forme illustrée sur la figure 1.

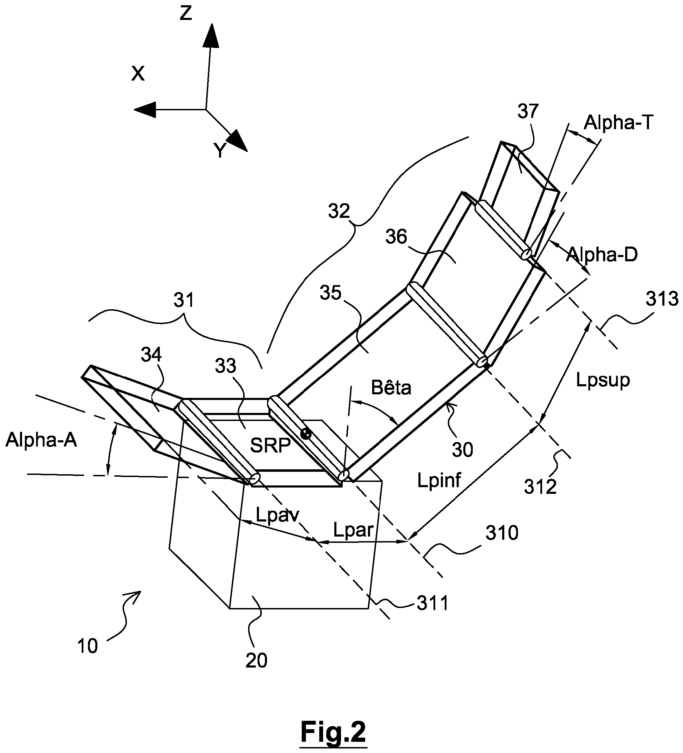

Dans une forme de réalisation, comme dans l'exemple illustré sur la figure 2, le siège 10 comporte un appui-tête 37 réglable assemblé au panneau de dossier supérieur 36 au niveau d'un bord supérieur dudit panneau de dossier supérieur 36.

Avantageusement l'appui-tête 37 est articulé par rapport au panneau de dossier supérieur 36 autour d'un axe de rotation d'appui-tête 313 orienté suivant l'axe Y, de sorte qu'un angle Alpha-T entre une surface d'appui dudit appui tête et le panneau de dossier supérieur puisse être modifié par l'utilisateur du siège entre au moins deux valeurs.

Par convention, l'angle Alpha-T est considéré positif lorsque l'appui-tête 37 est incliné vers le haut ou vers l'avant par rapport au panneau de dossier supérieur 36.

Dans une forme de réalisation, une position de l'appui-tête 37 suivant la longueur du dossier 32 est également modifiable pour prolonger plus ou moins le panneau de dossier supérieur 36 et donc la longueur efficace du dossier.

Suivant les exemples des configurations qui viennent d'être décrits, la structure de soutien 30 du siège 10, structure de soutien déterminant une surface de siège sur laquelle prend appui un occupant du siège, est constituée principalement par un ensemble de panneaux articulés entre eux, au moins deux panneaux d'assise et deux panneaux de dossier.

Les angles formés entre les panneaux au niveau des articulations déterminent une forme modulable de la structure de soutien et donc de la surface de siège.

En fonction de l'activité de l'occupant du siège, le choix de valeurs adaptées pour chacun des angles Alpha-A, Alpha-D et Bêta, et le cas échéant de l'angle Alpha-T, permet d'optimiser les courbures de la surface du siège comme détaillé ci-après.

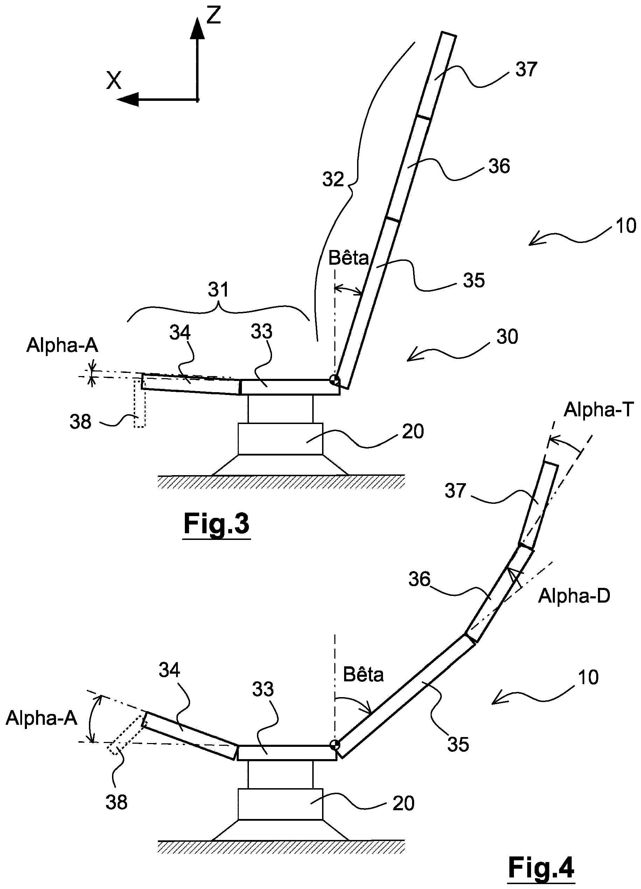

Dans une première position, illustrée sur la figure 3, le siège est adapté par la forme de la surface du siège à une position de travail.

Dans cette première position, l'angle Alpha-A entre le panneau d'assise avant 34 et le panneau d'assise arrière 33 est relativement réduit, proche d'une valeur nulle ou légèrement positive, de sorte à former une surface d'assise résultante sensiblement plane.

Dans cette première position, l'angle Alpha-D entre le panneau de dossier supérieur 36 et le panneau de dossier inférieur 35 est également relativement réduit, proche d'une valeur nulle ou légèrement positive, de sorte à former une surface de dossier résultante sensiblement plane.

Le dossier est dans cette position en position relevé, c'est-à-dire avec un angle Bêta faiblement positif, en général de l'ordre de 10 degrés, suivant la position de confort souhaité par l'occupant du siège en position de travail.

Il résulte ainsi, des angles entre les panneaux du siège, une forme conventionnelle de la surface d'appui du siège.

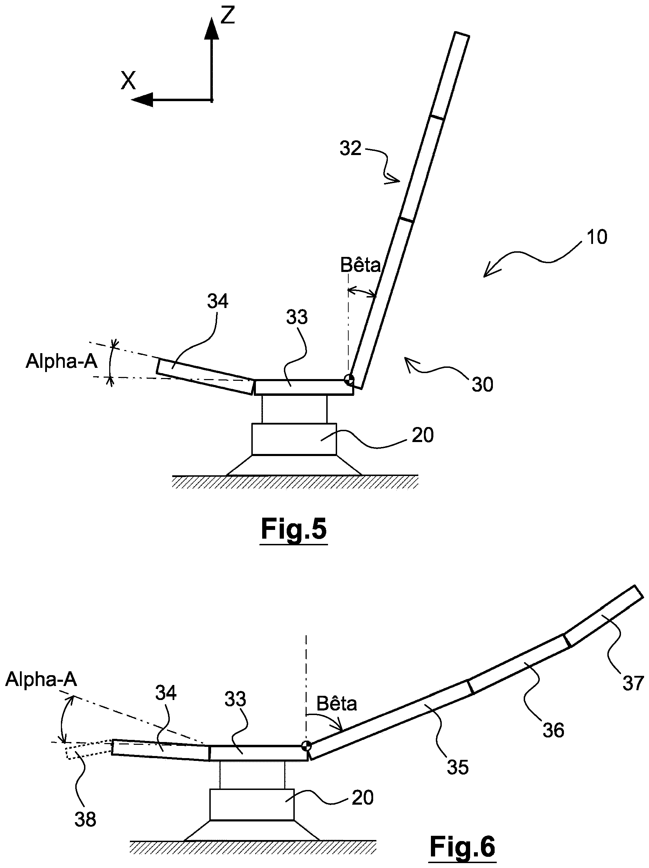

Dans une deuxième position, illustrée sur la figure 6, le siège est adapté par la forme de la surface du siège à une position de repos.

Dans cette deuxième position, comme dans la première position, l'angle Alpha-A entre le panneau d'assise avant 34 et le panneau d'assise arrière 33 est relativement réduit, proche d'une valeur nulle ou légèrement positive, de sorte à former une surface d'assise résultante sensiblement plane, et l'angle Alpha-D entre le panneau de dossier supérieur 36 et le panneau de dossier inférieur 35 est relativement réduit, proche d'une valeur nulle ou légèrement positive, de sorte à former une surface de dossier résultante sensiblement plane.

Dans cette deuxième position, à contrario de la première position, le dossier est incliné vers l'arrière d'un angle Bêta suffisamment grand pour donner à la surface d'appui du siège une forme d'ensemble relativement plane et horizontale procurant à un occupant du siège une position de relaxation musculo-squelettique.

En pratique il sera recherché pour l'angle Bêta une valeur maximale comprise entre 60 degrés et 90 degrés, mais cette valeur peut être limitée par la présence d'obstacles situés derrière le siège, par exemple une cloison du poste de pilotage lorsque le siège est installé dans un avion.

Dans une troisième position, illustrée sur la figure 4, le siège est adapté par la forme de la surface du siège à une position de veille, correspondant à une période de repos avec maintien de la vigilance.

Cette troisième position se caractérise d'une part par une inclinaison du dossier 32 vers l'arrière d'un angle Bêta suffisamment grand mais sans excéder 60 degrés environ pour procurer à un occupant du siège une position de relaxation musculo-squelettique et d'autre part par un angle Alpha-D entre le panneau de dossier supérieur 36 et le panneau de dossier inférieur 35 positif de sorte à relever les épaules et la tête d'un occupant du siège pour que les instruments et écrans situés devant le siège, instruments normalement utilisés lors du pilotage en phase de travail, se trouvent dans le champ visuel dudit occupant du siège sans nécessité de mouvement de tête particulier et notamment sans nécessité de relever la tête.

Dans une forme de réalisation, dans cette troisième position, l'angle Bêta d'inclinaison du dossier est d'environ 60 degrés et l'angle Alpha-D duquel est relevé le panneau de dossier supérieur 36 est d'environ 30 degrés.

En pratique il sera évité de dépasser pour l'angle Alpha-D la valeur de 30 degrés pour des raisons ergonomiques, une valeur trop supérieure pour cet angle pouvant créer un inconfort de l'occupant du siège et une fatigue allant à l'encontre de l'effet recherché.

Ainsi la tête de l'occupant du siège n'est inclinée vers l'arrière que de 30 degré environ (Bêta - Alpha-D) ce qui permet de regarder les instruments avec les seuls mouvements oculaires.

Lorsque le siège est équipé d'un appui-tête 37 comme dans la forme illustrée sur la figure 4, l'occupant du siège dispose à sa convenance de la capacité de régler la position angulaire dudit appui-tête, s'il est pourvu de cette capacité, pour améliorer sa position de veille.

Avantageusement dans cette troisième position, l'angle Alpha-A entre le panneau d'assise avant 34 et le panneau d'assise arrière 33 est fixé à une valeur positive, de sorte à relever le panneau d'assise avant 34 et à former une surface d'assise résultante en forme de cuvette qui évite que dans la position de veille l'occupant du siège ne glisse vers l'avant sous l'effet en particulier de son propre poids.

L'angle Alpha-A est de préférence compris entre 5 et 15 degrés, par exemple 8 degrés qui permet d'éviter le glissement dans de bonnes conditions de confort.

Dans une forme de réalisation du siège 10, un repose-jambes 38 est agencé mobile sur le siège à l'avant du panneau d'assise avant 34. Le repose jambes 38 est déployé pour prolonger, avec angle ergonomiquement adapté, le panneau d'assise avant dans la deuxième position et dans la troisième position.

Dans la première position, en configuration de travail, le repose-jambes 38 est avantageusement escamoté, par exemple dans ou sous la structure de soutien 30, pour ne pas gêner les mouvements de l'occupant du siège.

Dans une quatrième position, illustrée sur la figure 5, les capacités de réglage des angles entre les panneaux d'assise sont mises à profit pour placer le siège dans une configuration de "crash", améliorée pour des conditions d'accident.

Dans cette quatrième position, les panneaux du dossier 32 sont dans des positions similaires à celles de la première configuration de la position de travail, i.e. des valeurs similaire des angles Bêta, Alpha-D et le cas échéant Alpha-T, et le panneau d'assise avant 34 est relevé avec un angle Alpha-A supérieur à 5 degrés.

Cette dernière position du panneau d'assise avant assure un maintien vers l'avant de l'occupant du siège lorsqu'il est soumis aux accélérations d'un "crash" et limite ainsi le risque de sous-marinage.

Les mouvements relatifs entre les différents panneaux de la structure de soutien 30 autour des axes de rotation 310, 311, 312 et 313 sont réalisés par tout mécanisme adapté pour modifier l'angle entre deux panneaux articulés entre eux et pour immobiliser les deux panneaux à un angle voulu en fonction de la position du siège.

Par exemple un ou des actionneurs sont mis en oeuvre, de manière conventionnelle, pour assurer les mouvements et le verrouillage des panneaux de la structure de soutien.

Les actionneurs, par exemple électrique ou pneumatique, sont commandés par l'occupant du siège individuellement ou de préférence au travers d'une logique de commande qui coordonne les différents actionneurs pour passer d'une position à une autre du siège.

Dans cette dernière solution, avantageusement des commandes sont laissées à la disposition de l'occupant du siège pour lui permettre de modifier individuellement certains angles et d'adapter la position des différents panneaux à ses souhaits.

Dans une forme de réalisation, la logique de commande gère certains mouvements des panneaux du siège, en particulier le panneau de dossier supérieur 36, pour éviter des interférences avec l'environnement du siège.

Suivant une forme de réalisation le panneau de dossier supérieur 36, et le cas échéant l'appui-tête 37, sont liés mécaniquement au panneau de dossier inférieur 35 et ou à l'assise 31, par exemple par des liaisons à bielles ou autres moyens de transmission mécanique, de sorte que les angles Alpha-D, le cas échéant Alpha-T, prennent automatiquement certaines valeurs et / ou soient limitées à des plages de valeurs imposées en fonction de la valeur de l'angle d'inclinaison de dossier Bêta et / ou à une position longitudinale de l'assise 33.

Par exemple lorsque le panneau de dossier inférieur 35 est incliné vers l'arrière, le panneau de dossier supérieur 36, le cas échéant l'appui-tête 37, sont relevés par exemple pour éviter une interférence de parties arrière du siège avec une structure de l'environnement dudit siège.

Par exemple lorsque le siège est dans la configuration de veille, le retour du panneau de dossier inférieur 35 dans une position redressée, cas notamment de la position de travail, les angles Alpha-D, le cas échéant Alpha-T, sont modifiés pour conduire un alignement automatique du panneau de dossier supérieur 36, le cas échéant de la têtière 37, avec ledit panneau de dossier inférieur. Il est ainsi évité que l'occupant du siège ne se trouve poussé vers l'avant au niveau des épaules et ou de la tête lorsqu'il redresse l'ensemble du dossier 32.

Suivant la forme de réalisation, les mouvements des différents panneaux peuvent être liés de sorte que certains mouvements entraînent automatiquement les autres mouvements souhaités, ou les mouvements des différents panneaux sont limités, par exemple au moyen de butées variables. Ces différentes formes peuvent au besoin être combinées.

Suivant une forme de réalisation, la structure de soutien 30, fixée à la structure porteuse 20 par le panneau d'assise arrière 33 dont l'inclinaison est constante dans le repère siège, peut être déplacé verticalement ou dans un plan horizontal pour ajuster une hauteur ou une position longitudinale du siège.

De tels déplacements sont assurés par la structure porteuse 20 qui est par exemple extensible en hauteur et permet de réaliser des translations du panneau d'assise arrière 33 dans un plan horizontal.

L'invention permet ainsi de réaliser des sièges avec des surfaces d'appui de l'occupant du siège de formes ajustables permettant audit occupant d'adopter une position de veille dans laquelle il se trouve dans une position de relaxation musculo-squelettique tout en conservant, sans effort de maintien de la tête, une visibilité des instruments et écrans de son poste de travail lorsque la conduite de la machine est réalisée par un autre opérateur.

Cette visibilité des instruments diminue le "stress" de l'occupant du siège qui dans les positions de relaxation conventionnelles a tendance à se soulever fréquemment du dossier pour vérifier les instruments, en particulier à chaque événement aussi mineur soit-il dans le seul but de confirmer qu'aucune intervention de sa part n'est nécessaire.

Le siège de l'invention peut être installé dans tout environnement où un opérateur est en charge de surveiller une machine et de conduire des opérations sur des périodes relativement longues.

Une telle situation se trouve en particulier dans les postes de pilotage des aéronefs, plus particulièrement moyens et longs courriers, dont les durées des vols conduisent à des périodes de repos des pilotes, alternativement.

Le siège de l'invention permet également de disposer d'un siège avec une position de relaxation dans un espace exigu comme c'est fréquemment le cas dans les postes de pilotage des aéronefs en raison d'une cloison ou autre obstacle en arrière des sièges des pilotes.

## Revendications

1. - Siège (10) de conduite comportant une assise (31) et un dossier (32) formant une structure de soutien (30) et une surface d'appui pour un occupant du siège, déterminant un point de référence du siège SRP situé dans un plan vertical axial du siège à une jonction de surfaces d'appui de l'assise (31) et du dossier (32), dans lequel siège ledit dossier est fixé articulé sur ladite assise autour d'un axe d'inclinaison de dossier (310), orienté suivant une direction d'un axe Y perpendiculaire au plan vertical axial de symétrie d'ensemble du siège, situé dans une partie basse du dossier (32) et dans une partie arrière de l'assise (31) de sorte à permettre un angle d'inclinaison de dossier (Bêta) dudit dossier par rapport à une direction verticale Z réglable, dans lequel le dossier (32) comporte un panneau de dossier inférieur (35), maintenu du côté d'un bord inférieur dudit panneau de dossier inférieur avec un bord arrière de l'assise de sorte à former l'angle d'inclinaison de dossier (Bêta) modifiable, et comporte un panneau de dossier supérieur (36) situé dans le prolongement et au-dessus dudit panneau de dossier inférieur, un angle de relevage (Alpha-D) dudit panneau de dossier supérieur par rapport audit panneau de dossier inférieur étant modifiable lorsque le siège est utilisé,
**caractérisé en ce que** l'assise (31) comporte un panneau d'assise arrière (33), d'inclinaison fixe constante par rapport à une structure porteuse (20) du siège, sensiblement horizontal, et comporte un panneau d'assise avant (34), situé dans le prolongement et en avant dudit panneau d'assise arrière, un angle d'inclinaison d'assise (Alpha-A) dudit panneau d'assise avant par rapport audit panneau d'assise arrière étant modifiable lorsque le siège est occupé ;
et **en ce que** le siège (10) comporte :
- au moins une position de travail dans laquelle un occupant est dans une position assise avec le dossier (32) redressé et l'assise (31) sensiblement horizontale, et ;
- au moins une position de veille dans laquelle l'occupant occupe le siège avec le dossier (32) incliné vers l'arrière et partiellement redressé dans une partie supérieure correspondant au panneau de dossier supérieur (36) et avec l'assise (31) relevée dans une partie avant correspondant au panneau d'assise avant (34).

2. - Siège suivant la revendication 1 dans lequel l'au moins une position de travail se **caractérise par** :
- un angle d'inclinaison de dossier (Bêta) faiblement positif vers l'arrière, inférieur à 20 degrés, correspondant à un dossier redressé dans une position sensiblement verticale ;
- un angle de relevage (Alpha-D) du panneau de dossier supérieur faible, inférieur à 10 degrés en valeur absolue, correspondant à un dossier relativement plat ;
- un angle d'inclinaison d'assise (Alpha-A) faible, inférieur à 3 degrés en valeur absolue, correspondant à une assise relativement plate ;
et dans lequel l'au moins une position de veille se **caractérise par** ;
- un angle d'inclinaison de dossier (Bêta) positif, vers l'arrière, égal ou supérieur à 30 degrés et inférieur ou égal à 60 degrés ;
- un angle de relevage (Alpha-D) positif, vers le haut, égal ou supérieur à 20 degrés et inférieur ou égal 35 degrés ;
- un angle d'inclinaison d'assise (Alpha-A) positif, vers le haut, égal ou supérieur à 5 degrés et inférieur ou égal à 15 degrés.

3. - Siège suivant la revendication 1 ou la revendication 2 comportant une position repos dans lequel l'angle d'inclinaison de dossier (Bêta) est supérieur à 60 degrés.

4. - Siège suivant l'une des revendications 1 à 3 comportant une position de « crash » dans laquelle le dossier est redressé et dans laquelle l'angle d'inclinaison d'assise (Alpha-A) est égal ou supérieur à 5 degrés, de préférence supérieur à 8 degrés.

5. - Siège suivant l'une des revendications précédentes dans lequel une longueur Lpar du panneau d'assise arrière (33), suivant une direction longitudinale X du siège entre le point de référence SRP et un bord avant dudit panneau d'assise arrière, est déterminé à une valeur minimale pour qu'une tubérosité ischiatique d'un occupant du siège prenne appui sur ledit panneau d'assise arrière, au moins pour une population d'occupants du siège envisagée.

6. - Siège suivant la revendication 5 dans lequel la longueur Lpar est sensiblement égale à 150 mm.

7. - Siège suivant l'une des revendications précédentes dans lequel une longueur LPinf du panneau de dossier inférieur (35), entre le point de référence SRP et un bord supérieur dudit panneau de dossier inférieur, est déterminé pour correspondre sensiblement au niveau de la dixième vertèbre d'un occupant du siège, au moins pour une population d'occupants du siège envisagée.

8. - Siège suivant la revendication 7 dans lequel la longueur LPinf est sensiblement égale à 400 mm.

9. - Siège suivant l'une des revendications précédentes comportant un appui-tête (37) solidaire du panneau de dossier supérieur (36), réglable suivant une hauteur et ou une inclinaison par rapport audit panneau de dossier supérieur, et ou comportant un repose-jambes (38) solidaire du panneau d'assise avant, en avant d'un bord avant dudit panneau d'assise avant, et réglable en inclinaison.

10. - Siège suivant l'une des revendications précédentes comportant des actionneurs agencés pour modifier l'angle d'inclinaison du dossier (Bêta), l'angle de relevage (Alpha-D) du panneau de dossier supérieur et l'angle d'inclinaison d'assise (Alpha-A) du panneau d'assise avant.

11. - Siège suivant la revendication 10 comportant un dispositif de commande des actionneurs modifiant la position du siège entre au moins deux positions dont au moins une position de travail et au moins une position de veille en réponse à un ordre d'un occupant du siège.

12. - Siège suivant l'une des revendications précédentes comportant des commandes accessibles à un occupant du siège pour modifier individuellement l'angle d'inclinaison de dossier (Bêta), l'angle de relevage (Alpha-D) du panneau de dossier supérieur et l'angle d'inclinaison d'assise (Alpha-A).

13. - Siège suivant l'une des revendications précédentes dans lequel le panneau de dossier supérieur (36), et le cas échéant l'appui-tête (37), sont liés mécaniquement au panneau de dossier inférieur (35) et ou à l'assise (31), par exemple par des liaisons à bielles ou autres moyens de transmission mécanique, de sorte que les angles Alpha-D, le cas échéant Alpha-T, prennent automatiquement certaines valeurs et/ou soient limitées à des plages de valeurs imposées en fonction de la valeur de l'angle d'inclinaison de dossier Bêta et/ou à une position longitudinale de l'assise (33).

14. - Siège suivant l'une des revendications précédentes dans lequel le panneau d'assise arrière (33) est mobile, par rapport à un environnement dudit siège, en translations suivant une direction longitudinale X, et/ou suivant une direction transversale Y, et/ou suivant une direction verticale Z, les directions X, Y et Z déterminant un repère siège, par l'intermédiaire de la structure porteuse (20).

## Patentansprüche

1. Fahrersitz (10), umfassend eine Sitzfläche (31) und eine Rückenlehne (32), die eine Stützstruktur (30) und eine Auflagefläche für einen Sitzbenutzer bilden, wobei ein Referenzpunkt des Sitzes SRP bestimmt wird, der sich in einer axialen Vertikalebene des Sitzes an einer Verbindung von Auflageflächen der Sitzfläche (31) und der Rückenlehne (32) befindet, bei welchem Sitz die Rückenlehne gelenkig auf der Sitzfläche um eine Neigungsachse der Rückenlehne (310) befestigt ist, die in eine Richtung einer Achse Y senkrecht auf die axiale Gesamtheitsymmetrieverticalebene erichtet ist, die sich in einem unteren Teil der Rückenlehne (32) und in einem hinteren Teil der Sitzfläche (31) befindet, um einen Neigungswinkel der Rückenlehne (Beta) in Bezug zu einer einstellbaren Vertikalrichtung Z zu ermöglichen,
wobei die Rückenlehne (32) eine untere Rückenlehnenplatte (35) umfasst, die auf der Seite eines unteren Randes der unteren Rückenlehnenplatte mit einem hinteren Rand der Sitzfläche gehalten wird, um den veränderbaren Neigungswinkel der Rückenlehne (Beta) zu bilden, und eine obere Rückenlehnenplatte (36) umfasst, die sich in der Verlängerung und über der unteren Rückenlehnenplatte befindet, wobei ein Hebewinkel (Alpha-D) der oberen Rückenlehnenplatte in Bezug zur unteren Rückenlehnenplatte veränderbar ist, wenn der Sitz verwendet wird, **dadurch gekennzeichnet, dass** die Sitzfläche (31) eine hintere Sitzflächenplatte (33) mit einer konstanten festen Neigung in Bezug zu einer im Wesentlichen horizontalen Tragstruktur (20) des Sitzes umfasst und eine vordere Sitzflächenplatte (34) umfasst, die sich in der Verlängerung und vorne an der hinteren Sitzflächenplatte befindet, wobei ein Neigungswinkel der Sitzfläche (Alpha-A) der vorderen Sitzflächenplatte in Bezug zur hinteren Sitzflächenplatte veränderbar ist, wenn der Sitz besetzt ist, und dass der Sitz (10)
- mindestens eine Arbeitsposition umfasst, in der ein Sitzbenutzer in einer Sitzposition mit aufgerichteter Rückenlehne (32) und im Wesentlichen horizontaler Sitzfläche (31) ist, und
- mindestens eine Wachsamkeitposition umfasst, in der der Sitzbenutzer den Sitz besetzt, wobei die Rückenlehne (32) nach hinten geneigt und in einem oberen Teil, entsprechend der oberen Rückenlehnenplatte (36), aufgerichtet ist, und mit die Sitzfläche (31) in einem vorderen Teil, entsprechend der vorderen Sitflächenplatte (34), angehoben ist.

2. Sitz nach Anspruch 1, bei dem die mindestens eine Arbeitsposition **gekennzeichnet ist durch**:
- einen leicht positiven Neigungswinkel der Rückenlehne (Beta) nach hinten, der kleiner als 20 Grad ist, entsprechend einer in eine im Wesentlichen vertikale Position aufgerichteten Rückenlehne;
- einen geringen Hebewinkel (Alpha-D) der oberen Rückenlehnenplatte, der kleiner als 10 Grad im Absolutwert ist, entsprechend einer relativ flachen Rückenlehne;
- einen geringen Neigungswinkel der Sitzfläche (Alpha-A), der kleiner als 3 Grad im Absolutwert ist, entsprechend einer relativ flachen Sitzfläche;
und bei dem die mindestens eine Wachsamkeitposition **gekennzeichnet ist durch**:
- einen positiven Neigungswinkel der Rückenlehne (Beta) nach hinten, der gleich oder größer als 30 Grad und kleiner oder gleich 60 Grad ist;
- einen positiven Hebewinkel (Alpha-D) nach oben, der gleich oder größer als 20 Grad und kleiner oder gleich 35 Grad ist;
- einen positiven Neigungswinkel der Sitzfläche (Alpha-A) nach oben, der gleich oder größer als 5 Grad und kleiner oder gleich 15 Grad ist.

3. Sitz nach Anspruch 1 oder Anspruch 2, umfassend eine Ruheposition, in der der Neigungswinkel der Rückenlehne (Beta) größer als 60 Grad ist.

4. Sitz nach einem der Ansprüche 1 bis 3, umfassend eine "Crash"-Position, in der die Rückenlehne aufgerichtet ist und in der der Neigungswinkel der Sitzfläche (Alpha-A) gleich oder größer als 5 Grad, vorzugsweise größer als 8 Grad, ist.

5. Sitz nach einem der vorhergehenden Ansprüche, bei dem eine Länge Lpar der hinteren Sitzflächenplatte (33) entlang einer Längsrichtung X des Sitzes zwischen dem Referenzpunkt SRP und einem vorderen Rand der hinteren Sitzflächenplatte auf einen Mindestwert festgelegt ist, damit ein Sitzbeinhöcker eines Benutzers des Sitzes auf der hinteren Sitzflächenplatte aufliegt, zumindest bei einer vorgesehenen Population von Benutzern des Sitzes.

6. Sitz nach Anspruch 5, bei dem die Länge Lpar im Wesentlichen gleich 150 mm ist.

7. Sitz nach einem der vorhergehenden Ansprüche, bei dem eine Länge LPinf der unteren Rückenlehnenplatte (35) zwischen dem Referenzpunkt SRP und einem oberen Rand der unteren Rückenlehnenplatte festgelegt ist, um im Wesentlichen der Höhe des zehnten Wirbels eines Benutzers des Sitzes zu entsprechen, zumindest bei einer vorgesehenen Population von Benutzern des Sitzes.

8. Sitz nach Anspruch 7, bei dem die Länge LPinf im Wesentlichen gleich 400 mm ist.

9. Sitz nach einem der vorhergehenden Ansprüche, umfassend eine Kopfstütze (37), die mit der oberen Rückenlehnenplatte (36) verbunden ist, in der Höhe und/oder einer Neigung in Bezug zur oberen Rückenlehnenplatte verstellbar ist, und/oder umfassend eine Fußstütze (38), die mit der vorderen Sitzflächenplatte vorne am vorderen Rand der vorderen Sitzflächenplatte verbunden und in der Neigung verstellbar ist.

10. Sitz nach einem der vorhergehenden Ansprüche, umfassend Aktuatoren, die eingerichtet sind, um den Neigungswinkel der Rückenlehne (Beta), den Hebewinkel (Alpha-D) der oberen Rückenlehnenplatte und den Neigungswinkel der Sitzfläche (Alpha-A) der vorderen Sitzflächenplatte zu verändern.

11. Sitz nach Anspruch 10, umfassend eine Vorrichtung zur Steuerung der Aktuatoren, die die Position des Sitzes zwischen mindestens zwei Positionen, mindestens einer Arbeitsposition und mindestens einer Wachsamkeitposition, als Antwort auf einen Befehl eines Benutzers des Sitzes verändert.

12. Sitz nach einem der vorhergehenden Ansprüche, umfassend Steuerungen, die für einen Benutzer des Sitzes zugänglich sind, um individuell den Neigungswinkel der Rückenlehne (Beta), den Hebewinkel (Alpha-D) der oberen Rückenlehnenplatte und den Neigungswinkel der Sitzfläche (Alpha-A) zu verändern.

13. Sitz nach einem der vorhergehenden Ansprüche, bei dem die obere Rückenlehnenplatte (36) und gegebenenfalls die Kopfstütze (37) mechanisch mit der unteren Rückenlehnenplatte (35) und/oder mit der Sitzfläche (31) beispielsweise durch Stangenverbindungen oder andere mechanische Übertragungsmittel verbunden sind, so dass die Winkel Alpha-D, gegebenenfalls Alpha-T, automatisch gewisse Werte annehmen und/oder auf Wertebereiche, die in Abhängigkeit vom Wert des Neigungswinkels der Rückenlehne Beta vorgegeben sind, und/oder auf eine Längsposition der Sitzfläche (33) beschränkt sind.

14. Sitz nach einem der vorhergehenden Ansprüche, bei dem die hintere Sitzflächenplatte (33) in Bezug zu einer Umgebung des Sitzes in Translation entlang einer Längsrichtung X und/oder entlang einer Querrichtung Y und/oder entlang einer Vertikalrichtung Z beweglich ist, wobei die Richtungen X, Y und Z einen Bezugspunkt des Sitzes mit Hilfe der Tragstruktur 20 bestimmen.

## Claims

1. - Driving seat (10) comprising a base (31) and a back rest (32) forming a support structure (30) and a bearing surface for an occupant of the seat, determining a seat reference point SRP situated in a vertical axial plane of the seat at a junction of bearing surfaces of the base (31) and of the back rest (32), in which seat said back rest is fixed articulated onto said base about an axis of inclination of the back rest (310), oriented in a direction of an axis Y at right angles to the vertical axial plane of overall symmetry of the seat, situated in a bottom part of the back rest (32) and in a rear part of the base (31) so as to allow a back rest inclination angle (Beta) of said back rest relative to a vertical direction Z that is adjustable,
in which the back rest (32) comprises a lower back rest panel (35), held on the side of a bottom edge of said lower back rest panel with a rear edge of the base so as to form the back rest inclination angle (Beta) that is modifiable, and comprises an upper back rest panel (36) situated in the extension of and above said lower back rest panel, a raising angle (Alpha-D) of said upper back rest panel relative to said lower back rest panel being modifiable when the seat is used, **characterized in that** the base (31) comprises a rear base panel (33), of constant fixed inclination relative to a supporting structure (20) of the seat, substantially horizontal, and comprises a front base panel (34), situated in the extension and in front of said rear base panel, a base inclination angle (Alpha-A) of said front base panel relative to said rear base panel being modifiable when the seat is occupied, and **in that** the seat (10) comprises:
- at least one working position in which an occupant is in a seated position with the back rest (32) straightened and the base (31) substantially horizontal and;
- at least one watchfulness position in which the occupant occupies the seat with the back rest (32) inclined backwards and partially straightened in an upper part corresponding to the upper back rest panel (36) and with the base (31) raised in a front part corresponding to the front base panel (34).

2. - Seat according to Claim 1, in which the at least one working position is **characterized by**:
- a back rest inclination angle (Beta) that is weakly positive backwards, less than 20 degrees, corresponding to a straightened back rest in a substantially vertical position;
- a small raising angle (Alpha-D) of the upper back rest panel, less than 10 degrees as an absolute value, corresponding to a relatively flat back rest;
- a small base inclination angle (Alpha-A), less than 3 degrees as an absolute value, corresponding to a relatively flat base;
and in which the at least one watchfulness position is **characterized by**:
- a positive back rest inclination angle (Beta), backwards, equal to or greater than 30 degrees and less than or equal to 60 degrees;
- a positive raising angle (Alpha-D), upwards, equal to or greater than 20 degrees and less than or equal to 35 degrees;
- a positive base inclination angle (Alpha-A), upwards, equal to or greater than 5 degrees and less than or equal to 15 degrees.

3. - Seat according to Claim 1 or Claim 2, comprising a rest position in which the back rest inclination angle (Beta) is greater than 60 degrees.

4. - Seat according to one of Claims 1 to 3, comprising a crash position in which the back rest is straightened and in which the base inclination angle (Alpha-A) is equal to or greater than 5 degrees, preferably greater than 8 degrees.

5. - Seat according to one of the preceding claims, in which a length Lpar of the rear base panel (33), in a longitudinal direction X of the seat between the reference point SRP and a front edge of said rear base panel, is determined with a minimum value for an ischial tuberosity of an occupant of the seat to bear on said rear base panel, at least for an envisaged population of occupants of the seat.

6. - Seat according to Claim 5, in which the length Lpar is substantially equal to 150 mm.

7. - Seat according to one of the preceding claims, in which a length LPinf of the lower back rest panel (35), between the reference point SRP and a top edge of said lower back rest panel, is determined to correspond substantially to the level of the tenth vertebra of an occupant of the seat, at least for an envisaged population of occupants of the seat.

8. - Seat according to Claim 7, in which the length LPinf is substantially equal to 400 mm.

9. - Seat according to one of the preceding claims, comprising a head rest (37) secured to the upper back rest panel (36), that can adjusted by height and/or inclination relative to said upper back rest panel, and/or comprising a leg rest (38) secured to the front base panel, in front of a front edge of said front base panel, and adjustable in inclination.

10. - Seat according to one of the preceding claims, comprising actuators arranged to modify the back rest inclination angle (Beta), the raising angle (Alpha-D) of the upper back rest panel and the base inclination angle (Alpha-A) of the front base panel.

11. - Seat according to Claim 10, comprising a device for controlling the actuators modifying the position of the seat between at least two positions, including at least one working position and at least one watchfulness position, in response to a command from an occupant of the seat.

12. - Seat according to one of the preceding claims, comprising controls accessible to an occupant of the seat to individually modify the back rest inclination angle (Beta), the raising angle (Alpha-D) of the upper back rest panel and the base inclination angle (Alpha-A).

13. - Seat according to one of the preceding claims, in which the upper back rest panel (36), and, where appropriate, the head rest (37), are linked mechanically to the lower back rest panel (35) and/or to the base (31), for example by connecting rod links or other mechanical transmission means, such that the angles Alpha-D, and where appropriate Alpha-T, automatically assume certain values and/or are limited to ranges of values imposed as a function of the value of the back rest inclination angle Beta and/or to a longitudinal position of the base (33).

14. - Seat according to one of the preceding claims, in which the rear base panel (33) is translationally mobile, relative to an environment of said seat, in a longitudinal direction X, and/or in a transverse direction Y, and/or in a vertical direction Z, the directions X, Y and Z determining a seat reference frame, via the supporting structure 20.
